# EUROPEAN PATENT APPLICATION

(11) **EP 4 459 786 A1**
(43) Date of publication of application: **06.11.2024**
(21) Application number: 21969701.8
(22) Date of filing: 31.12.2021
(51) Int. Cl.: H01M 50/593, H01M 50/296

(54) **BATTERY MODULE WITHOUT BUSBAR, AND BATTERY PACK**

(71) Applicant: AESC Dynamics Technology (Jiangsu) Ltd., 214443 Wuxi City, Jiangsu Province (CN); AESC Intelligent Innovation Dynamics Technology (Shanghai) Ltd., Shanghai 201315 (CN)
(72) Inventor: CHEN, Zhuolie, Shanghai 200120 (CN); CUI, Xin, Shanghai 200120 (CN); LI, Dengke, Shanghai 200120 (CN); HE, Yafei, Shanghai 200120 (CN)
(74) Representative: Becker, Eberhard
(86) International application number: PCT/CN2021/143665
(87) International publication number: WO 2023/123350

(57) **Abstract**

The present application relates to the technical field of traction batteries, and in particular to a battery module without a busbar, and a battery pack. The battery module without a busbar provided in the present application comprises: a plurality of battery cells (3), wherein two ends of each battery cell (3) are provided with tabs (31), the battery cells (3) connected to each other are in direct connection by means of the tabs (31), and a separation assembly is arranged between adjacent battery cells (3). By means of the present application, a direct connection is realized by means of tabs, and a busbar is omitted, so as to avoid the blocking of a high-temperature flue gas by the busbar, such that the high-temperature flue gas can be exhausted in a timely manner upon thermal runaway; moreover, the tabs of battery cells can be isolated, thereby preventing the thermal runaway caused by a short-circuit due to the contact between the adjacent tabs during operation, and preventing thermal spreading at the tabs.

## Description

### BACKGROUND

### Technical Field

The present disclosure relates to the technical field of batteries, for example, to a busbar-less battery module and a battery pack.

### Description of Related Art

As the environmental protection issues have drawn increasing attention, electric vehicles driven by new energy have become more and more popular. The energy density of battery packs is related to the traveling range of electric vehicles. In order to meet high energy requirements, the current battery pack adopts a large number of secondary batteries for series-parallel combination. As the energy density of battery packs is getting higher, the thermal safety issues coming along have caused serious problems. The safety of battery packs directly affects the safety of electric vehicles and passengers. Therefore, the safety problem of battery packs now hinders popularization of electric vehicles. How to effectively solve the safety problem of the battery pack has become an urgent issue.

With the development of electric vehicle industry, electric vehicle factories have imposed increasingly stringent requirements on the cost of the battery pack system, so as to promote standardization of batteries and battery modules. Battery modules have been adopted more commonly by domestic battery manufacturers in recent years. The overall dimensions of battery modules are similar, but their structures are different.

In the related art, the thickness of the cell is often limited due to cell expansion, for example, and such limitation leads to a significant restriction on the size of the bus bar after the cells are grouped together. However, under the conditions that high-rate charging and discharging is required, considering various factors such as the current carrying capability, the constraints on the size of the bus bar, and the size requirements of the welding process, bus bar is no longer suitable to be adopted for series-parallel connection.

Therefore, there is an urgent demand of a busbar-less battery module and a battery pack to solve the above technical problems.

### SUMMARY

This disclosure provides a busbar-less battery module and battery pack. The design without the bus bar prevents the bus bar from blocking the high-temperature fume, so that the high-temperature fume may be exhausted in time when thermal runaway occurs. In the meantime, the tabs of the cell may be isolated to prevent adjacent tabs from contacting each other during operation and causing thermal runaway due to short circuit, thereby avoiding spread of heat at the tabs.

In the first aspect, the present disclosure provides a busbar-less battery module, which includes:

A plurality of cells, and tabs are provided at both ends of each cell, and the interconnected cells are directly connected through the tabs, and an isolation component is provided for adjacent cells.

In an optional technical solution of the busbar-less battery module, the isolation component is a heat insulation plate, and the busbar-less battery module also includes an outer enclosing plate, and the outer enclosing plate includes two opposite side plates and two opposite end plates, the end plates are arranged between the side plates.

The heat insulation plate is arranged between the adjacent cells, the first end of each heat insulation plate is located in the area enclosed by the connected tabs for the adjacent cells, and the distance between the second end of each heat insulation plate and the end plate is smaller than the distance between the tab and the end plate.

In an optional technical solution of the busbar-less battery module, a spacer is further included. The spacer is arranged between the cells to divide a plurality of cells into multiple cell groups. Each cell group at least includes two cells, the distance from the first end of the spacer to the end plate is smaller than the distance from the tab to the end plate, and the second ends of the spacer are in the area enclosed by the connected tabs for the adjacent cells.

In an optional technical solution of the busbar-less battery module, the spacer includes a first spacer and a second spacer, and the first spacer includes a first frame and heat insulation layers on both sides of the first frame. The first frame is provided with a first grooved channel along the length direction to allow wires to pass through, and the second spacer includes a second frame and heat insulation layers disposed on both sides of the second frame.

In an optional technical solution of the busbar-less battery module, the tabs for the cell on both sides of the first spacer are welded through connectors; the tabs for the cell on both sides of the second spacer and the heat insulation plate are welded together.

In an optional technical solution of the busbar-less battery module, both the first frame and the second frame are made of metal.

In an optional technical solution of the busbar-less battery module, the first frame includes partition plates and horizontal plates. The partition plates are arranged at intervals, and the horizontal plates are arranged between the partition plates, and the two ends of each horizontal plate are respectively connected to the partition plates, the horizontal plates are arranged at intervals.

In an optional technical solution of the busbar-less battery module, the end plate is provided with a plurality of exhaust holes, and the plurality of cells and the plurality of exhaust holes are provided in one-to-one correspondence.

In an optional technical solution of the busbar-less battery module, reinforcing ribs are arranged in the space enclosed by the exhaust hole, and the reinforcing ribs are arranged at intervals along the length direction of the exhaust hole.

In an optional technical solution of the busbar-less battery module, no insulation support is provided at both ends of the cell.

In an optional technical solution of the above busbar-less battery module, the isolation component is a tab holder.

The plurality of cells are connected in series or in parallel through tabs.

The tab holder is arranged at one end of the cell, at least one end of the tab holder is connected to an output electrode. The tab holder includes a wire harness area and a tab separation area connected to the wire harness area. The tab separation area is provided with a plurality of dividers, and the plurality of dividers are arranged at intervals to form connection holes. Each connection hole is pierced with tabs, and the tabs pierced through the same connection hole are directly fixed and connected to each other through bending and stacking.

In an optional technical solution of the busbar-less battery module, the wire harness area is provided with a plurality of wire harness stoppers and a plurality of wire harness fixing posts, and a wire harness fixing post is provided above each of the connection holes.

In an optional technical solution of the busbar-less battery module, a spacer is further included. The spacer is arranged between the cells to divide the plurality of the cells into a plurality of cell groups, and each cell group at least includes two cells.

In an optional technical solution of the busbar-less battery module, the spacer includes a first spacer and a second spacer. The first spacer is located in the middle of the battery module, and both sides of the first spacer are respectively provided with the second spacer. The first spacer includes a first frame and heat insulation layers arranged on both sides of the first frame, and the first frame is provided with a first grooved channel along the length direction to allow the wires to pass through. The second spacer includes a second frame and heat insulation layers arranged on both sides of the second frame.

In an optional technical solution of the busbar-less battery module, the tabs for the cell arranged on both sides of the first spacer are welded by connectors; the tabs for the cell on both sides of the second spacer are welded to each other.

In an optional technical solution of the busbar-less battery module, both the first frame and the second frame are made of metal.

In an optional technical solution for the busbar-less battery module, the first frame includes partition plates and horizontal plates, the partition plates are arranged at intervals, and the horizontal plates are arranged between the partition plates. Both ends of each horizontal plate are respectively connected to the partition plates, the horizontal plates are arranged at intervals to form the first grooved channel.

In an optional technical solution of the busbar-less battery module, an outer enclosing plate is further included. The outer enclosing plate includes a top plate, a bottom plate, two opposite side plates and two opposite end plates. Both ends of each end plate are respectively connected to the two side plates. The top plate, the bottom plate, the two side plates and the two end plates are connected to form a cavity for accommodating the cell. A plurality of exhaust holes are arranged on the end plate, and the plurality of cells and the plurality of exhaust holes are arranged in one-to-one correspondence.

In an optional technical solution of the busbar-less battery module, reinforcing ribs are arranged in the space enclosed by the exhaust hole.

In a second aspect, the present disclosure further provides a battery pack, including the above-mentioned busbar-less battery module.

### BRIEF DESCRIPTION OF THE DRAWINGS

FIG. 1 is a schematic structural view of a busbar-less battery module provided by Embodiment 1 of the present disclosure.
FIG. 2 is an exploded schematic view of a busbar-less battery module provided by the Embodiment 1 of the present disclosure.
FIG. 3 is a sectional view of a busbar-less battery module provided by Embodiment 1 of the present disclosure.
FIG. 4 is a partial enlarged view of part A in FIG. 3.
FIG. 5 is a partial enlarged view of part B in FIG. 3.
FIG. 6 is a schematic structural view of a busbar-less battery module provided by Embodiment 2 of the present disclosure.
FIG. 7 is a schematic structural view of a tab holder provided in Embodiment 2 of the present disclosure.
FIG. 8 is a partial enlarged view at part C in FIG. 7.
FIG. 9 is a partial enlarged view of the connection between the connected tab provided by the Embodiment 2 of the present disclosure after passing through the tab holder and connecting to the connector.
FIG. 10 is a partial view of a first spacer provided in Embodiment 2 of the present disclosure.

### In the figure:

1. side plate; 2. end plate; 21. exhaust hole; 3. cell; 31. tab; 4. heat insulation plate; 5. first spacer; 51. partition plates; 52. horizontal plates; 6. second spacer; 7. top plate; 8. connector; 9. tab holder; 91. wire harness area; 911. wire harness stopper; 912. wire harness fixing post; 92. tab separation area; 921. divider; 922. connection hole.

### DESCRIPTION OF THE EMBODIMENTS

In the description of the present disclosure, unless otherwise clearly specified and limited, the terms "connected", "linked" and "fixed" should be understood in a broad sense, for example, the above terms may refer to a fixed connection, a detachable connection, or integral formation; mechanical or electrical connection; direction connection or indirect connection through an intermediary; or the internal communication of two components or the interaction relationship between two components. Those of ordinary skill in the art can understand the specific meanings of the above terms in the present disclosure in specific situations.

In the present disclosure, unless otherwise clearly specified and limited, a first feature being "on" or "below" a second feature may indicate direct contact between the first and second features, and may also indicate that the first and second features are not in direct contact but are in indirect contact through another feature between them. Moreover, the first feature being "above", "over" and "on" the second feature indicates that the first feature is directly above and obliquely above the second feature, or merely indicates that the first feature is at a level higher than the second feature. The first feature being "below", "beneath" and "under" the second feature indicates that the first feature is directly below and obliquely below the second feature, or simply means that the first feature is at a level lower than the second feature.

In the description of the present disclosure, the orientation or positional relationship of the terms "upper", "lower", "left", "right" is interpreted based on the orientation or positional relationship shown in the accompanying drawings, and are only for the convenience of description and simplification of operation. It does not indicate or imply that the device or element referred to must have a specific orientation, be constructed and operate in a specific orientation, and therefore should not be construed as limitation to the present disclosure. In addition, the terms "first" and "second" are only used for discrimination in description, and have no special meaning.

The present disclosure provides a busbar-less battery module and a battery pack. The battery pack includes a busbar-less battery module, the busbar-less battery module includes: a plurality of cells (3), tabs (31) are provided at both ends of each cell (3), and the interconnected cells (3) are directly connected through the tabs (31). An isolation component is provided between the adjacent cells (3).

The disclosure will be described in detail below in conjunction with the accompanying drawings and embodiments.

### Embodiment 1

The Embodiment 1 provides a battery pack, which may isolate adj acent tabs after thermal runaway occurs, thus preventing tabs undergoing thermal runaway from affecting adjacent tabs and causing thermal runaway to adjacent tabs, thereby preventing spread of heat at the tabs.

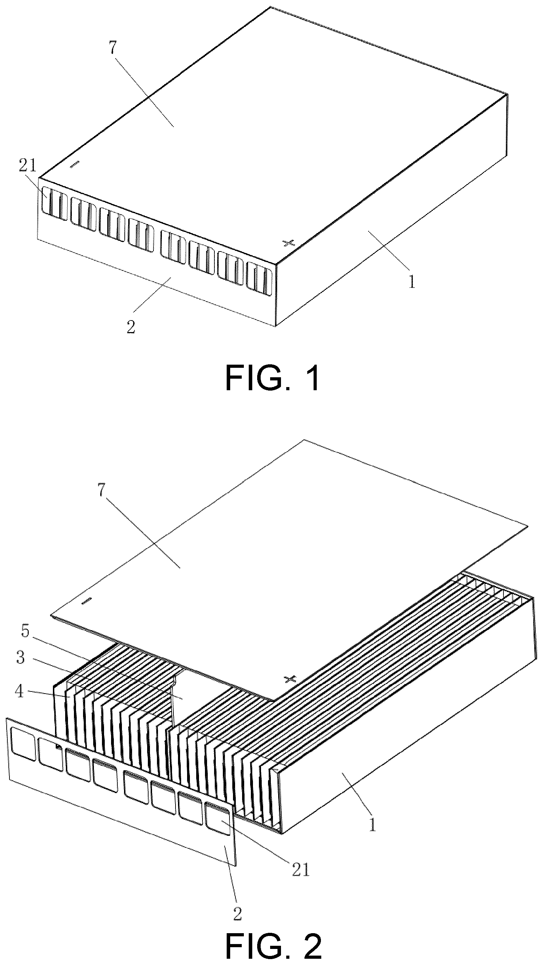

The battery pack includes a busbar-less battery module, as shown in FIG. 1 and FIG. 2. The busbar-less battery module includes an outer enclosing plate, a bottom plate, a top plate 7 and a plurality of cells3. The top plate 7 and the bottom plate are respectively arranged on the top and the bottom of the outer enclosing plate, and are respectively connected with the outer enclosing plate. The outer enclosing plate includes two opposite side plates 1 and two opposite end plates 2, and the end plates 2 are arranged between the side plates 1.

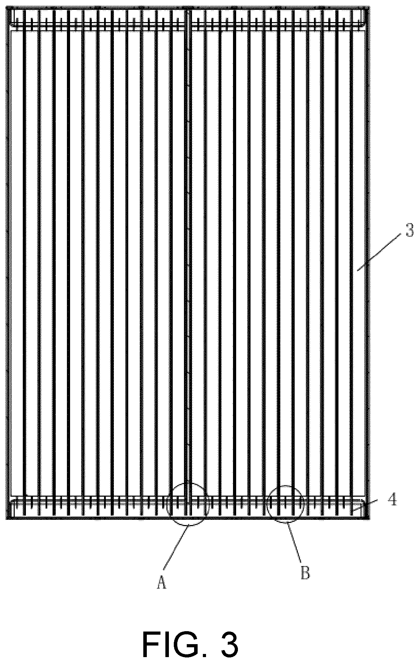

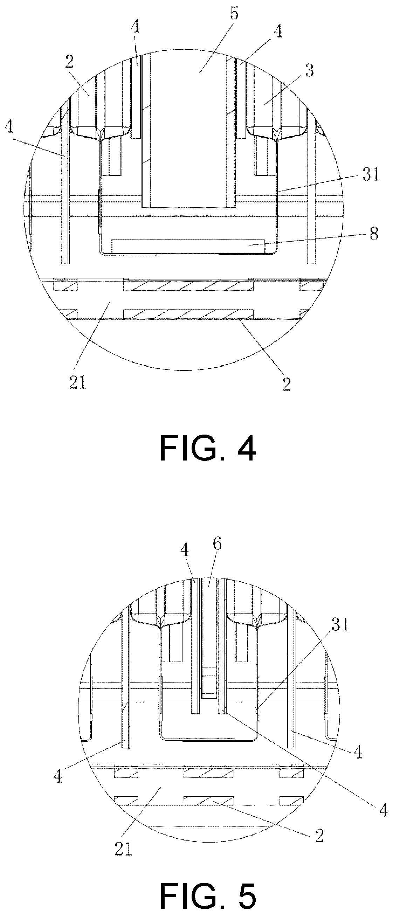

As shown in FIG. 3 to FIG. 5, tabs 31 are provided at both ends of the cell 3, the interconnected cells 3 are directly connected through the tabs 31, and the tabs 31 are connected in series or in parallel. A heat insulation plate 4 is arranged between the adjacent cells 3. The first end of each heat insulation plate 4 is located in the area enclosed by the connected tabs 31 for the adjacent cell 3, and the distance between the second end of each heat insulation plate 4 and the end plate 2 is smaller than the distance between the tab 31 and the end plate 2.

Since the heat insulation plate 4 is arranged between the adjacent cells 3 and the battery module is not provided with the bus bar, the design without the bus bar prevents the bus bar from blocking the high-temperature fume. Therefore, the tabs 31 are directly connected, and the high-temperature fume may be discharged in time when thermal runaway occurs. The two heat insulation plates 4 that are arranged at intervals and are not located in the area enclosed by the welded tabs may limit the welded tabs 31 in a separate area. The separate area may isolate the welded tab 31 from other tabs 31 and slows down the heat spreading speed at the welded tab 31. After the bus bar is eliminated, the tabs 31 are directly connected, for example, by welding, which helps to effectively discharge the high-temperature fume when thermal runaway occurs.

The busbar-less battery module includes an outer enclosing plate and a plurality of cells. The outer enclosing plate includes two opposite side plates and two opposite end plates, and the end plates are arranged between the side plates. The two ends of the cell are provided with tabs and the cells are directly connected through the tabs. A heat insulation plate is set between adjacent cells. The first end of each heat insulation plate is located in the area enclosed by the connected tabs for the adjacent cells. The distance between the second end of each heat insulation plate and the end plate is smaller than the distance between the tab and the end plate. Since there is a heat insulation plate between adjacent cells and the battery module is not provided with a bus bar, the design without the bus bar prevents the bus bar from blocking the high-temperature fume. Accordingly, because the tabs are directly connected, the high-temperature fume may be exhausted in time when thermal runaway occurs. The distance between the second end of each heat insulation plate and the end plate is smaller than the distance between the tab and the end plate, and the two longer heat insulation plates arranged at intervals may limit the welded tabs in a separation area (that is, two heat insulation plates arranged at intervals and not located in the area enclosed by the welded tabs may limit the tab to a separate area), such separate area may prevent adjacent tabs from contacting each other during operation and causing thermal runaway due to short circuit. Besides, the separate area may isolate the welded tab from other tabs, thereby slowing down the heat spreading speed at the welded tab. When the bus bar is omitted and the tabs are directly connected, it is possible for the high-temperature fume undergoing thermal runaway to be discharged effectively. The length of the heat insulation plate is longer than that of the heat insulation plate with bus bars, and the heat preservation effect is better.

When the busbar-less battery module is large, the heat of a single cell 3 spreads faster after thermal runaway occurs. In order to slowing down the spreading speed of heat, refer to FIG 2. In this embodiment, the busbar-less battery module further includes a spacer, and the spacer is arranged between the cells 3 in order to divide multiple cells 3 into multiple cell groups. Each cell group at least includes single body of two cells 3. It may be understood that the number of cells 3 in each cell group can be uniformly or non-uniformly distributed, and the number of cells 3 in each cell group is limited according to actual needs. It should be noted that the distance from the first end of the spacer to the end plate 2 is smaller than the distance from the tab 31 to the end plate 2, and the second end of the spacer is located in the area enclosed by the connected tabs 31 for the adjacent cells 3. That is, the first end of the spacer may be arranged in contact with the end plate 2, thereby separating multiple cells 3 into independent cell groups, and the spacer cooperates with the heat insulation plate 4 to effectively reduce the heat spread speeding of the cell 3.

Optionally, the spacer includes a first spacer 5 and a second spacer 6. The first spacer 5 includes a first frame and heat insulation layers arranged on both sides of the first frame. The first frame is provided with a first grooved channel along the length direction to allow the wires to pass through to facilitate wiring of the busbar-less battery module. The second spacer 6 includes a second frame and heat insulation layers arranged on both sides of the second frame. Both the first spacer 5 and the second spacer 6 include heat insulation layers, and the heat insulation layers may slow down the heat spreading speed, so that the first spacer 5 and the second spacer 6 may effectively reduce the heat spreading speed after thermal runaway occurs to a cell group, thereby preventing thermal runaway from occurring to adjacent cell groups in a short period of time.

Since the first spacer 5 is provided with a first grooved channel along the length direction to allow the wires to pass through, the thickness of the first spacer 5 is greater than the thickness of the second spacer 6. In order to connect the tabs 31 for the cell 3 at both ends of the first spacer 5, as shown in FIG. 3 to FIG. 5, in this embodiment, the tabs 31 for the cell 3 on both sides of the first spacer 5 are welded through the connector 8, that is, the tabs 31 for the cell 3 located on both sides of the first spacer 5 are welded to the same connector 8 to realize the connection of the tabs 31, and the connector 8 is a copper plate. In addition, in this embodiment, the tabs 31 for the cell 3 on both sides of the second spacer 6 and the heat insulation plate 4 are directly welded together.

In this embodiment, the bus bar is omitted, and the tabs 31 are directly welded together, which helps to effectively discharge the high-temperature fume when thermal runaway occurs. In the meantime, there is no insulation support provided at both ends of the cell 3, the insulation support includes the tab holder, and the available space may allow accommodation of a longer heat insulation plate 4. The longer the heat insulation plate 4 is, the more heat may be suppressed. When the heat insulation plate 4 contacts the end plate 2, the heat insulation plate 4 on both sides of the tab 31 and the end plate 2 form a grid, and the grid helps to prevent the heat at the tab 31 from spreading to the adjacent tabs 31. Optionally, both the first frame and the second frame are made of metal. Both the first frame and the second frame are made of metal aluminum, and such design may improve the strength of the first spacer 5 and the second spacer 6.

Optionally, the first frame includes partition plates and horizontal plates. The partition plates are arranged at intervals, and the horizontal plates are arranged between the partition plates. Both ends of each horizontal plate are respectively connected to the partition plates, and the horizontal plates are arranged at intervals. The arrangement of the horizontal plates at intervals may form the first grooved channel, which facilitates wiring of the busbar-less battery module. In the meantime, the arrangement of the horizontal plates may also improve the strength of the first spacer 5.

In order to be able to remove the fume from the busbar-less battery module, referring to FIG. 1 and FIG. 2, in this embodiment, a plurality of exhaust holes 21 are arranged on the end plate 2, and a plurality of cells 3 and a plurality of exhaust holes 21 are arranged in one-to-one correspondence. The cell 3 and the exhaust hole 21 are arranged in one-to-one correspondence, so it is possible to realize the directional exhaust function of the cell 3 undergoing thermal runaway, and help to slow down the thermal runaway of the cell 3, thereby improving the safety of battery pack. Optionally, the exhaust hole 21 is a waist-shaped hole, that is, an elongated hole. Since the exhaust hole 21 is long in length, such design will affect the overall strength of the busbar-less battery module. Therefore, in this embodiment, reinforcing ribs are disposed in the space enclosed by the exhaust hole 21. Exemplarily, a plurality of reinforcing ribs are arranged at intervals along the length direction of the exhaust hole 21. The plurality of reinforcing ribs are arranged in the space formed by the exhaust hole 21, and the reinforcing ribs are arranged along the length of the exhaust hole 21, such design makes it possible to effectively improve the strength of the end plate 2.

It should be noted that each side plate 1 is provided with an output electrode, and the tab 31 of the cell 3 adjacent to the side plate 1 is welded to the output electrode through copper wires to ensure that the busbar-less battery module may be in normal use.

It should be noted that the heat insulation layer and the heat insulation plate 4 may be heat-insulating ceramic material layers, aluminum oxide or glass fiber.

### Embodiment 2

The thickness of the cell is often limited due to cell expansion, and such limitation leads to a significant restriction on the size of the bus bar after the cells are grouped together. Under the conditions that high-rate charging and discharging is required, considering various factors such as the current carrying capability, the constraints on the size of the bus bar, and the size requirements of the welding process, bus bar is no longer suitable to be adopted for realization of series-parallel connection. In light of the foregoing, the present embodiment provides a battery module. The battery module is not provided with a bus bar, so the tabs of the cell are directly fixed and connected together. By setting the tab separation area, it is possible to prevent the tabs on both sides of the tab separation area from contacting each other and causing short circuit. In this way, the reliability of the module may be ensured without busbars.

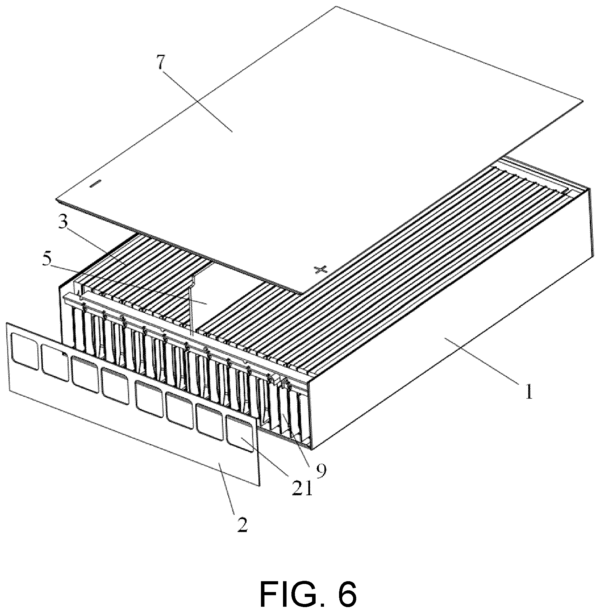

As shown in FIG. 6, the busbar-less battery module includes a plurality of cells 3, a tab holder 9, a spacer and an outer enclosing plate. The outer enclosing plate has a cavity. The outer enclosing plate includes a top plate 7, a bottom plate, two side plates 1 and two end plates 2. The two side plates 1 are arranged opposite to each other. Both ends of each end plate 2 are respectively connected with the side plate 1, and the two end plates 2 are opposite to each other and arranged at intervals. The top plate 7 is set on the top of the end plate 2 and the side plate 1, the bottom plate is set on the bottom of the end plate 2 and the side plate 1. The top plate 7, the bottom plate, the two side plates 1 and the two end plates 2 are connected to form a cavity for accommodating the cell 3. The cell 3, the tab holder 9 and spacer are placed in the cavity enclosed by the outer enclosing plate. Multiple cells 3 are connected in series or in parallel through tabs 31, and the tab holder 9 is arranged at one end of the cell 3.

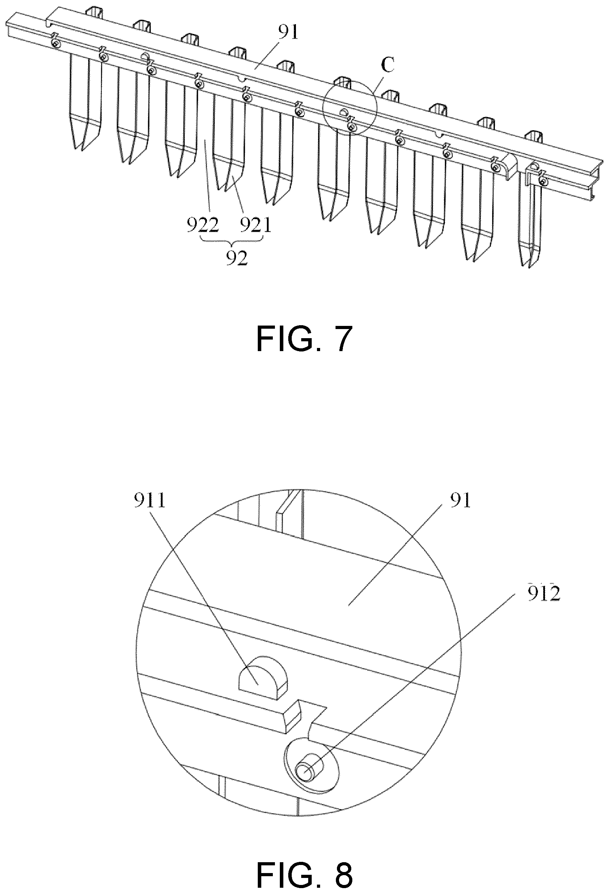

As shown in FIG. 7, at least one end of the lug holder 9 is connected with an output electrode, and the tab holder 9 includes a wire harness area 91 and a tab separation area 92 connected to the wire harness area 91. The tab separation area 92 is provided with a plurality of dividers 921, and the plurality of dividers 921 are arranged at intervals to form connection holes 922. Each connection hole 922 is pierced with a tab 31, and the tabs 31 pierced in the same connection hole 922 are directly fixed and connected to each other through bending and stacking. The wire harness area 91 is provided with a second grooved channel.

In the battery module provided in this embodiment, the tabs 31 are directly fixed and connected to each other through bending and stacking. In the design without the bus bar, the cell 3 and the cell 3 are directly connected. In this way, the process may be simplified, and the cost may be effectively reduced. In the meantime, the design of omitting the bus bar makes it possible to provide sufficient accommodating space for other components. Moreover, the design without bus bar prevents the bus bar from blocking the high-temperature fume, so that the high-temperature fume may be exhausted in time when thermal runaway occurs. The tab separation area 92 of the tab holder 9 may isolate the tabs 31 from each other to prevent short circuit due to contact of the tabs 31 during the working process of the battery module. The second grooved channel may integrate low-voltage acquisition lines to ensure the reliability of the battery module.

Optionally, referring to FIG. 8, in this embodiment, the wire harness area 91 is provided with a plurality of wire harness stoppers 911 and a plurality of wire harness fixing posts 912, and a wire harness fixing post 912 is arranged above each connecting hole 922. The wire harness stopper 911 and the wire harness fixing post 912 cooperate with each other to fix the wire harness, so that the low-voltage acquisition lines are neatly laid in the wire harness area 91 of the tab holder 9, so that the space at the front end of the tab holder 9 is reasonably utilized to prevent the low-voltage lines from becoming a mess.

When the battery module is large, the heat of a single cell 3 spreads faster after thermal runaway occurs. In order to slowing down the spreading speed of heat, the battery module in the present embodiment further includes a spacer, and the spacer is arranged between the cells 3 in order to divide multiple cells 3 into multiple cell groups. Each cell group at least includes two cells 3. When the cell 3 in one of the cell groups undergoes thermal runaway, due to the existence of the spacer, it is possible to prevent the heat generated by the cell 3 undergoing thermal runaway from spreading to the cell group not affected by thermal runaway. It may be understood that the number of wires in each cell group can be uniformly or non-uniformly distributed, and the number of cells 3 in each cell group is limited according to actual needs.

Optionally, as shown in FIG. 6, the spacer includes a first spacer 5 and a second spacer. The first spacer 5 includes a first frame and heat insulation layers arranged on both sides of the first frame. The first frame is provided with a first grooved channel along the length direction to allow the wires to pass through to facilitate wiring of the battery module. The second spacer includes a second frame and heat insulation layers disposed on both sides of the second frame. Both the first spacer 5 and the second spacer include heat insulation layers, and the heat insulation layers may slow down the heat spreading speed, so that the first spacer 5 and the second spacer may effectively reduce the heat spreading speed after thermal runaway occurs to one cell. In this way, it is possible to prevent thermal runaway from occurring to adjacent cells in a short period of time. The first spacer 5 is located in the middle of the battery module, and the second spacer is located on both sides of the first spacer 5. The number of the first spacer 5 is one, and the number of the second spacer is at least two.

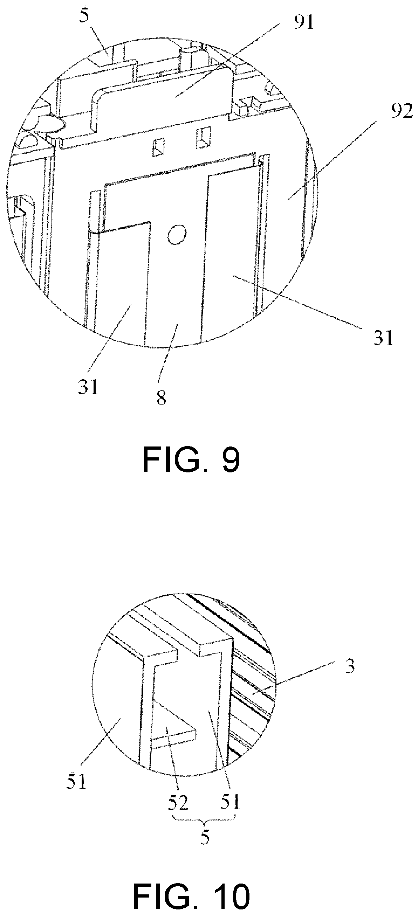

Since the first spacer 5 is provided with the first grooved channel along the length direction to allow the wires to pass through, the thickness of the first spacer 5 is greater than that of the second spacer. In order to connect the tabs 31 for the cell 3 at both ends of the first spacer 5, in this embodiment, as shown in FIG. 9, the tabs 31 for the cell 3 on both sides of the first spacer 5 are welded together through the connector 8, that is, the tabs 31 for the cell 3 located on both sides of the first spacer 5 are welded to the same connector 8 to realize the connection of the tabs 31. In an embodiment, the connector 8 is a copper plate. In this embodiment, the tabs 31 for the cells 3 of the second spacer are directly welded together. In this embodiment, the bus bar is omitted, and the tab 31 is directly welded, which helps to effectively discharge the high-temperature fume when thermal runaway occurs. Optionally, both the first frame and the second frame are made of metal. Both the first frame and the second frame are made of metal aluminum, and such design may improve the strength of the first spacer 5 and the second spacer.

Optionally, as shown in FIG. 10, the first frame includes partition plates 51 and horizontal plates 52, the partition plates 51 are arranged at intervals, and the horizontal plates 52 are arranged between the partition plates 51. Both ends of each horizontal plate 52 are respectively connected to the partition plates 51, and the horizontal plates 52 are arranged at intervals. The horizontal plates 52 arranged at intervals may form a first grooved channel to facilitate the wiring of the battery module. Meanwhile, the arrangement of the horizontal plates 52 may also improve the strength of the first spacer 5.

In order to remove heat from the battery module, in this embodiment, as shown in FIG. 6, multiple exhaust holes 21 are provided on the end plate 2, and multiple cells 3 and multiple exhaust holes 21 are arranged in one-to-one correspondence. The cell 3 and the exhaust hole 21 are set in one-to-one correspondence, which may realize the directional exhaust function of the cell 3 undergoing thermal runaway, which makes it possible to slow down thermal runaway of the cell 3 and improve the safety of the battery pack. Optionally, the exhaust hole 21 is a waist-shaped hole, that is, an elongated hole. Since the exhaust hole 21 is long, such design will affect the overall strength of the battery module. Therefore, in this embodiment, the space enclosed by the exhaust hole 21 is provided with reinforcing ribs. Exemplarily, a plurality of reinforcing ribs are arranged at intervals along the length direction of the exhaust hole 21. A plurality of reinforcing ribs are arranged in the space formed by the exhaust hole 21, and the reinforcing ribs are arranged along the length of the exhaust hole 21, thereby effectively improving the strength of the end plate 2.

It should be noted that each side plate 1 is provided with an output electrode, and the tabs 31 for the cell 3 adjacent to the side plate 1 are welded to the output electrode through copper wires to ensure that the battery module may be in normal use.

Embodiment 2 of the present disclosure further provides a battery pack, which includes the busbar-less battery module described in Embodiment 2.

## Claims

1. A busbar-less battery module, comprising:
a plurality of cells (3), wherein tabs (31) are provided at both ends of each of the cells (3), and the interconnected cells (3) are directly connected through the tabs (31), and an isolation component is provided between the adjacent cells (3).

2. The busbar-less battery module according to claim 1, wherein the isolation component is a heat insulation plate (4), and the busbar-less battery module further comprises:
an outer enclosing plate, which comprises two opposite side plates (1) and two opposite end plates (2), and the end plates (2) are arranged between the side plates (1);
wherein the heat insulation plate (4) is arranged between the adjacent cells (3), a first end of each of the heat insulation plates (4) is located in an area enclosed by the connected tabs (31) for the adjacent cells (3), and a distance between a second end of each of the heat insulation plates (4) and the end plate (2) is smaller than a distance between the tab (31) and the end plate (2).

3. The busbar-less battery module according to claim 2, further comprising a spacer, wherein the spacer is arranged between the cells (3) to divide the plurality of cells (3) into a plurality of cell groups, each of the cell groups at least comprises two of the cells (3), a distance from a first end of the spacer to the end plate (2) is smaller than a distance from the tab (31) to the end plate (2), and second ends of the spacer are in the area enclosed by the connected tabs (31) for the adjacent cells (3).

4. The busbar-less battery module according to claim 3, wherein the spacer comprises a first spacer (5) and a second spacer (6), the first spacer (5) comprises a first frame and heat insulation layers on both sides of the first frame, the first frame is provided with a first grooved channel along a length direction to allow wires to pass through, and the second spacer (6) comprises a second frame and heat insulation layers disposed on both sides of the second frame.

5. The busbar-less battery module according to claim 4, wherein the tabs (31) for the cells (3) on both sides of the first spacer (5) are welded through connectors (8); the tabs (31) for the cells (3) on both sides of the second spacer (6) and the heat insulation plate (4) are welded together.

6. The busbar-less battery module according to claim 4, wherein both the first frame and the second frame are made of metal.

7. The busbar-less battery module according to claim 4, wherein the first frame comprises partition plates (51) and horizontal plates (52), the partition plates (51) are arranged at intervals, the horizontal plates (52) are arranged between the partition plates (51), and two ends of each of the horizontal plates (52) are respectively connected to the partition plates (51), and the horizontal plates (52) are arranged at intervals.

8. The busbar-less battery module according to claim 2, wherein the end plate (2) is provided with a plurality of exhaust holes (21), and the plurality of cells (3) and the plurality of exhaust holes (21) are provided in one-to-one correspondence.

9. The busbar-less battery module according to claim 8, wherein reinforcing ribs are arranged in a space enclosed by the exhaust hole (21), and the reinforcing ribs are arranged at intervals along a length direction of the exhaust hole (21).

10. The busbar-less battery module according to any one of claims 2-8, wherein no insulation support is provided at the both ends of the cell (3).

11. The busbar-less battery module according to claim 1, wherein the isolation component is a tab holder (9);
the plurality of cells (3) are connected in series or in parallel through the tabs (31);
the tab holder (9) is arranged at one end of the cell (3), at least one end of the tab holder (9) is connected to an output electrode, the tab holder (9) comprises a wire harness area (91) and a tab separation area (92) connected to the wire harness area (91), the tab separation area (92) is provided with a plurality of dividers (921), and the plurality of dividers (921) are arranged at intervals to form connection holes (922), each of the connection holes (922) is pierced with the tabs (31), and the tabs (31) pierced through the same connection hole (922) are directly fixed and connected to each other through bending and stacking.

12. The busbar-less battery module according to claim 11, wherein the wire harness area (91) is provided with a plurality of wire harness stoppers (911) and a plurality of wire harness fixing posts (912), and one of the wire harness fixing posts (912) is provided above each of the connection holes (922).

13. The busbar-less battery module according to claim 11, further comprising a spacer, wherein the spacer is arranged between the cells (3) to divide the plurality of the cells (3) into a plurality of cell groups, and each of the cell groups at least comprises two of the cells (3).

14. The busbar-less battery module according to claim 13, wherein the spacer comprises a first spacer (5) and a second spacer (6), the first spacer (5) is located in the middle of the battery module, and both sides of the first spacer (5) are respectively provided with the second spacer (6), the first spacer (5) comprises a first frame and heat insulation layers arranged on both sides of the first frame, and the first frame is provided with a first grooved channel along a length direction to allow wires to pass through, the second spacer (6) comprises a second frame and heat insulation layers arranged on both sides of the second frame.

15. The busbar-less battery module according to claim 14, wherein the tabs (31) for the cells (31) arranged on the both sides of the first spacer (5) are welded by connectors (8); the tabs (31) for the cells (3) on both sides of the second spacer (6) are welded to each other.

16. The busbar-less battery module according to claim 14, wherein both the first frame and the second frame are made of metal.

17. The busbar-less battery module according to claim 14, wherein the first frame comprises partition plates (51) and horizontal plates (52), the partition plates (51) are arranged at intervals, and the horizontal plates (552) are arranged between the partition plates (51), both ends of each of the horizontal plates (52) are respectively connected to the partition plates (51), and the horizontal plates (52) are arranged at intervals to form the first grooved channel.

18. The busbar-less battery module according to claim 11, further comprising an outer enclosing plate, wherein the outer enclosing plate comprises a top plate (7), a bottom plate, two opposite side plates (1) and two opposite end plates (2), both ends of each of the end plates (2) are respectively connected to the two side plates (1), the top plate (7), the bottom plate, the two end plates (2) and the two side plates (1) are connected to form a cavity for accommodating the cell (3), a plurality of exhaust holes (21) are arranged on the end plates (2), and the plurality of cells (3) and the plurality of exhaust holes (21) are arranged in one-to-one correspondence.

19. The busbar-less battery module according to claim 18, wherein reinforcing ribs are arranged in a space enclosed by the exhaust hole (21).

20. A battery pack, comprising the busbar-less battery module according to any one of claims 1-19.
